# EUROPÄISCHE PATENTSCHRIFT

(11) **EP 1 650 854 B1**
(45) Veröffentlichungstag und Bekanntmachung des Hinweises auf die Patenterteilung: **09.07.2008**
(21) Anmeldenummer: 05023034.1
(22) Anmeldetag: 21.10.2005
(51) Int. Cl.: H02K 41/02, F16C 29/06

(54) **Linearführungs-Vorschubmodul mit Führungskörper sowie Ausleger hierfür**
Linear guide feed-modulus with guide body as well as support arm therefor
Module d'avance linéaire avec corps de guidage et cantilever pour ça

(30) Priorität: 25.10.2004 DE 102004051829
(43) Veröffentlichungstag der Anmeldung: 26.04.2006
(73) Patentinhaber: Bosch Rexroth Mechatronics GmbH, 97424 Schweinfurt (DE)
(72) Erfinder: Königer, Berthold, Dipl.-Ing., 97440 Werneck (DE); Spatschek, Gerd, Dipl.-Ing., 97638 Mellrichstadt (DE); Dirschbacher, Josef, Dipl.-Ing., 97478 Knetzgau (DE)
(74) Vertreter: Herzog, Markus

(56) Entgegenhaltungen:
- CH-A- 315 948
- DE-C- 931 019
- US-A- 4 304 443
- US-A- 4 339 157
- US-B1- 6 402 381
- PATENT ABSTRACTS OF JAPAN Bd. 017, Nr. 584 (M-1501), 25. Oktober 1993 (1993-10-25) -& JP 05 172138 A (T H K KK), 9. Juli 1993 (1993-07-09)

## Beschreibung

Die vorliegende Erfindung betrifft ein Linearführungs-Vorschubmodul mit einem längs einer Verlagerungsachse verlagerbaren rohrförmigen Ausleger, mit einem den rohrförmigen Ausleger umschließenden Gehäuse, aus welchem heraus und in welches hinein der Ausleger längs der Verlagerungsachse verfahrbar ist, sowie mit einer Antriebsvorrichtung, welche den Ausleger zur Bewegung relativ zum Gehäuse antreibt, wobei der Ausleger in dem Gehäuse durch wenigstens zwei in Umfangsrichtung um die Verlagerungsachse mit Abstand angeordnete umlaufende Wälzkörperreihen zur Bewegung längs der Verlagerungsachse relativ zum Gehäuse gelagert ist, von welchen umlaufenden Wälzkörperreihen jede einen im Wesentlichen in Richtung der Verlagerungsachse verlaufenden kraftbelasteten Wälzkörpertragabschnitt und einen im Wesentlichen unbelasteten Wälzkörperrückführabschnitt aufweist. Die vorliegende Erfindung betrifft insbesondere ein Linearführungs-Vorschubmodul nach dem Oberbegriff des Anspruchs 1.

Die JP 5-172138 A offenbart ein Linearführungs-Vorschubmodul nach dem Oberbegriff des Anspruchs 1. Das bekannte Vorschubmodul umfasst einen verlagerbaren Ausleger, ein Gehäuse sowie einen Führungskörper, an welchem der Ausleger mittels Wälzkörperreihen verschiebbar geführt ist, wobei der Ausleger von zwei gegenüberliegenden Seiten her von jeweils einem U-förmigen Führungskörper gehalten wird. An jedem Führungskörper sind zwei Wälzkörperreihen angeordnet, die einen Umfangsrichtungsabstand von ungefähr 90° zueinander aufweisen.

Weitere Vorschubmodule mit Linearführung sind beispielsweise aus der DE 87 12 696 U1 oder aus der EP 0 907 456 B1 bekannt.

Die DE 87 12 696 U1 offenbart ein Linearführungs-Vorschubmodul mit einem rohrförmigen Gehäuse, in das koaxial ein Ausleger relativ zum Gehäuse beweglich eingesetzt ist. Der Ausleger wird durch eine Gewindespindel zur Bewegung in Richtung einer Verlagerungsachse aus dem Gehäuse heraus und in dieses hinein angetrieben. In dem Gehäuse sind Hohlzylinderschalensegmente mit Fixierstiften und Schrauben festgelegt. An den Hohlzylinderschalensegmenten sind dort an radial verlaufenden Abstützflächen Rollenumlaufschuhe befestigt, in welchen jeweils eine umlaufende Wälzkörperreihe aufgenommen ist.

An diesen Rollenumlaufschuhen stützt sich an der hohlzylindersegmentfernen Seite der Ausleger mit entsprechenden ebenfalls in radialer Richtung verlaufenden Abstützflächen ab.

Die EP 0 907 456 B1 offenbart ebenfalls ein Linearführungs-Vorschubmodul, welches als gattungsbildend angesehen werden kann. Das aus dieser Druckschrift bekannte Vorschubmodul weist einen Ausleger und ein den Ausleger umschließendes koaxiales Gehäuse auf. In Ausnehmungen des Gehäuses sind, wie die Rollenumlaufschuhe der zuvor genannten DE 87 12 696 U1, vorgefertigte Kugelumlaufeinheiten mit jeweils zwei Tragabschnitten eingesetzt und durch Schrauben fixiert. Die Kugelumlaufeinheiten ragen bezogen auf die mit der Verlagerungsachse zusammenfallende Gehäusemittelachse vom Gehäuse aus radial in den den Ausleger aufnehmenden Hohlraum hinein. In Umfangsrichtung sind vier Kugelumlaufeinheiten mit einem Winkelabstand von 90° vorgesehen. An den Tragabschnitten dieser Kugelumlaufeinheiten ist der Ausleger relativ zum Gehäuse in Richtung der Verlagerungsachse beweglich geführt.

Nachteilig an den genannten Linearführungs-Vorschubmodulen ist der hohe Montageaufwand, der durch eine exakte Ausrichtung der einzelnen Kugelumlaufeinheiten bzw. Rollenumlaufschuhe entsteht. Diese vorgefertigten Umlaufeinheiten sind zum einen sowohl bezüglich ihrer Parallelität zur gewünschten Verlagerungsachse als auch bezüglich der von ihnen auf den Ausleger ausgeübten Vorspannung zu justieren.

Als weiteren Stand der Technik wird auf die EP 0 767 526 B1 hingewiesen. Diese zeigt ein Linearführungs-Vorschubmodul, bei welchem der Ausleger mit einer Gleitführung anstelle einer Wälzkörperführung in dem ihn umschließenden Gehäuse in Richtung der Verlagerungsachse beweglich geführt ist. Die Gleitführung zwischen Gehäuse und Ausleger ist gemäß der EP 0 767 526 B1 als Keilprofil ausgebildet, um gleichzeitig für eine Verdrehsicherung des Auslegers relativ zum Gehäuse zu sorgen. Nachteilig an dieser Bauart sind jedoch die aufgrund der Gleitführung erforderlichen hohen Kräfte zur Verlagerung des Auslegers relativ zum Gehäuse.

Als weiterer Stand der Technik wird verwiesen auf die Druckschrift US 6,700,228 B2, in welcher ein linear geführter linearmotorisch angetriebener Schlitten gezeigt ist. Dieser Schlitten ist an entgegengesetzten Seitenwänden in einem U-förmigen Träger durch dort angeordnete umlaufende Wälzkörperreihen in Führungsrichtung beweglich gelagert.

Schließlich wird verwiesen auf die Druckschrift CH-A-315948, in welcher ein weiter unten angesprochenes Hämmern als Herstellungsverfahren für Rohre mit einer gewünschten von einer glatten Zylinderform abweichenden Innenkontur, wie etwa Gewehrläufe, offenbart ist.

Zur weiteren Illustration des Standes der Technik wird ferner auf die US 4,339,157 A, die DE 931 019 C, die US 4,304,443 A sowie die US 6,402,381 B1 verwiesen, welche weitere Beispiele für Linearführungs-Vorschubmodule offenbaren, in denen ein Gehäuse entlang eines Auslegers verlagerbar ist, wobei zwischen Gehäuse und Ausleger wenigstens eine Wälzkörperreihe angeordnet ist.

Aufgrund der obigen Nachteile des Standes der Technik ist es eine Aufgabe der vorliegenden Erfindung, ein gattungsgemäßes Linearführungs-Vorschubmodul bereitzustellen, welches mit im Vergleich zum Stand der Technik vereinfachter Montage herstellbar ist, und Verspannungen zwischen den Umlaufenden Wälzkörperreihen zuverlässig vermeidet.

Diese Aufgabe wird erfindungsgemäß durch ein Linearführungs-Vorschubmodul nach Anspruch 1 gelöst. Erfindungsgemäß ist in dem Gehäuse ein den Ausleger in Umfangsrichtung zumindest abschnittsweise umgebender Führungskörper vorgesehen, an welchem sowohl Wälzkörperdurchgänge der Wälzkörperrückführabschnitte ausgeformt sind als auch die gehäuseseitigen Laufbahnen der Wälzkörpertragabschnitte der wenigstens zwei Wälzkörperreihen vorgesehen sind.

Erfindungsgemäß sind also eine Mehrzahl von umlaufenden Wälzkörperreihen in einem einzigen Führungskörper aufgenommen. Somit können die gehäuseseitigen Laufbahnen an dem Führungskörper vorgesehen sein, sodass ihre Justage entfällt. Vielmehr reicht es aus, die Laufbahnen an dem Führungskörper in der gewünschten Orientierung vorzusehen, was bei der Fertigung des Führungskörpers wesentlich einfacher zu erreichen ist als bei der Montage einzelner Wälzkörperumlaufeinheiten.

Vorzugsweise wird der Führungskörper in einer einzigen Aufspannung gefertigt, was die größtmögliche Lagegenauigkeit von Laufbahnen unterschiedlicher Wälzkörperreihen am Führungskörper gewährleistet.

Die gehäuseseitigen Laufbahnen der Wälzkörpertragabschnitte können entweder direkt am Führungskörper ausgebildet sein oder es können Laufbahneinlagen an dem Führungskörper angebracht sein, auf welchen die Wälzkörper abwälzen. Im letztgenannten Fall sind am Führungskörper die Aufnahmen für die Laufbahneinlagen mit ausreichender Genauigkeit zu fertigen, sodass die Laufbahneinlagen nach ihrer Anbringung am Führungskörper in der gewünschten Lage und Orientierung vorgesehen sind.

Dabei gilt auch für einen Führungskörper mit Laufbahneinlagen, dass die lagegenaue Fertigung von entsprechenden Aufnahmen für Laufbahneinlagen weniger Aufwand in Anspruch nimmt als eine lagegenaue Montage einzelner Wälzkörper-Umlaufeinheiten.

Für eine hohe Führungssteifigkeit unter Verwendung nur eines einzigen Führungskörpers weist der Führungskörper, in einer zur Verlagerungsachse orthogonalen Schnittebene betrachtet, einen U-förmigen Querschnitt auf, wobei die gehäuseseitigen Wälzkörpertragabschnitt-Laufbahnen in Endbereichen der freien Schenkel des U-förmigen Querschnitts vorgesehen sind. Bei dieser konstruktiven Ausbildung werden die wenigstens zwei Wälzkörpertragabschnitt-Laufbahnen mit ausreichendem Abstand in Umfangsrichtung voneinander vorgesehen, sodass der Ausleger mit ausreichender Vorspannung im Gehäuse geführt werden kann.

Zur Aufnahme besonders hoher Führungskräfte bzw. für eine hochgenaue Führung können mehr als zwei umlaufende Wälzkörperreihen vorgesehen sein. Da an der Auslegeraußenseite bauraumbedingt nicht an beliebigen Stellen auslegerseitige Wälzkörperlaufbahnen vorgesehen werden können, sind vorzugsweise wenigstens zwei benachbarte Wälzkörperreihen zu einer Wälzkörperreiheneinheit zusammengefasst. Die Wälzkörperreihen einer Wälzkörperreiheneinheit weisen im Wesentlichen parallele Wälzkörperumlaufbahnen auf. Besonders bevorzugt sind jeweils genau zwei umlaufende Wälzkörperreihen zu einem Wälzkörperreihenpaar zusammengefasst, da dadurch bereits sehr hohe Führungskräfte auf sehr eng begrenztem Raum aufgenommen werden können.

Eine möglichst gute Vorspannung des von den Wälzkörperreihen geführten Auslegers sowie eine besonders gute Aufnahme von Führungskräften in zwei sowohl zueinander als auch zur Richtung der Verlagerungsachse orthogonalen Richtungen wird erfindungsgemäß dadurch erreicht, dass der Umfangsrichtungsabstand zwischen zwei Wälzkörperreihen, beziehungsweise zwischen zwei Wälzkörperreiheneinheiten, zwischen 145° und 225°, vorzugsweise zwischen 160° und 200°, besonders bevorzugt etwa 180° beträgt. Außerdem kommt man dann an einem axialen Abschnitt des Linearführungs-Vorschubmoduls mit nur einem Führungskörper aus.

Eine einstückige Ausbildung von Führungskörper und Gehäuse könnte mitunter die Bearbeitung des Führungskörpers vor allem hinsichtlich der Wälzkörperdurchgänge und Laufbahnen bzw. Laufbahnaufnahmen erschweren. Daher ist der Führungskörper gesondert vom Gehäuse ausgebildet. Zur einfachen Ausrichtung des Führungskörpers relativ zum Gehäuse kann dabei der Führungskörper eine Ausrichtgeometrie aufweisen, welche im montierten Zustand des Vorschubmoduls mit einer Ausrichtgegengeomtrie des Gehäuses zur Lagefixierung des Führungskörpers wenigstens in Umfangsrichtung sowie zur Orientierung des Führungskörpers relativ zur Verlagerungsachse zusammenwirkt.

Beim Vorsehen eines gesonderten Führungskörpers ist zu berücksichtigen, dass für die Aufnahme des Führungskörpers der Hohlraum des Gehäuses, welcher den Ausleger und den Führungskörper aufnimmt, vergrößert werden muss, verglichen mit einem Gehäuse des Standes der Technik oder mit einem Gehäuse mit einstückig daran ausgebildeten Führungskörper. Durch diesen vergrößerten Hohlraum im Gehäuse wird die Gehäusesteifigkeit verringert. Es hat sich jedoch überraschend gezeigt, dass die durch den Führungskörper erzielte Montagevereinfachung bei gleichzeitig erhöhter Führungsgenauigkeit die reduzierte Gehäusesteifigkeit mehr als aufwiegt. Es ist daher ein Verdienst der Erfinder der vorliegenden Erfindung, sich über derartige Vorbehalte hinweggesetzt zu haben.

Die Ausrichtgeometrie und die Ausrichtgegengeomtrie können durch einfachen Anlageeingriff aneinander eine gewünschte Lage und Orientierung des Führungskörpers sicherstellen. Konstruktiv und auch aus fertigungstechnischer Sicht besonders einfach kann das Linearführungs-Vorschubmodul derart ausgebildet sein, dass die Ausrichtgeometrie und die Ausrichtgegengeomtrie jeweils wenigstens zwei zueinander um eine zur Verlagerungsachse parallele Abwinkelachse abgewinkelte, vorzugsweise im Wesentlichen ebene, Anlageflächen beziehungsweise Gegenanlageflächen aufweisen, wobei die zwei Anlageflächen und die zwei Gegenanlageflächen jeweils vorzugsweise einen rechten Winkel einschließen.

Bei einer bevorzugten Ausführungsform der vorliegenden Erfindung kann der Ausleger aus Aluminium gebildet sein, um Gewicht einzusparen. Zur Verschleißminderung können dabei vorteilhaft Laufbahneinlagen aus verschleißfestem Material, etwa aus Stahl, insbesondere gehärtetem Stahl oder Hartmetall, und dergleichen, verwendet werden. Derartige Laufbahneinlagen sind beispielsweise aus der US 5,097,716 A (oder aus dem Familienmitglied EP 0 367 196 A2) bekannt. Ebenfalls wird auf die Offenbarung der deutschen Patentanmeldung DE 10 2004 018820, soweit sie Laufbahneinlagen betrifft, verwiesen. Diese zeigt ganz besonders vorteilhafte Ausführungsformen von Laufbahneinlagen.

Sind hochsteife Vorschubmodule gewünscht, kann der Führungskörper auch aus Stahl hergestellt sein.

Eine besonders kompakte Bauweise eines Linearführungs-Vorschubmoduls bei hoher Steifigkeit kann dadurch erhalten werden, dass zumindest ein Abschnitt eines Bewegungsausgabeteils der Antriebsvorrichtung von dem Ausleger umschlossen ist. Weiterhin wird durch diese Bauart die im Wesentlichen biegemomentenfreie Übertragung von Antriebskraft vom Bewegungsausgabeteil auf den Ausleger möglich.

Grundsätzlich kann bei einer Weiterbildung der vorliegenden Erfindung daran gedacht sein, eine Kolben-Zylinder-Einheit als die Antriebsvorrichtung zu verwenden. Bevorzugt umfasst wegen der höheren erreichbaren Positioniergenauigkeit des Auslegers die Antriebsvorrichtung jedoch einen Elektromotor, besonders bevorzugt einen numerisch steuerbaren Elektromotor. Da in der Regel bei Linearführungs-Vorschubmodulen der hier beschriebenen Bauart linearmotorische Antriebe aufgrund des zur Verfügung stehenden geringen Bauraums nicht eingesetzt werden können, kann eine Verlagerung des Auslegers längs der Verlagerungsachse erreicht werden, wenn die Antriebsvorrichtung neben dem Elektromotor eine eine Drehbewegung in eine lineare Translationsbewegung umsetzende Vorrichtung umfasst. Dies kann beispielsweise ein Kugelgewindetrieb sein, welcher sich in Vorschubmodulen der hier diskutierten Bauart bewährt hat. Daneben sind jedoch auch anderen derartige Vorrichtungen denkbar, etwa ein Zahnrad-Zahnstangen-Getriebe und dergleichen.

Verwendet die Antriebsvorrichtung einen Kugelgewindetrieb und ist dessen Spindel zur Erzielung einer möglichst kompakten, d.h. in Richtung der Verlagerungsachse kurzen, Bauweise vom Ausleger umschlossen, wobei sie je nach Bewegungsstellung des Auslegers unterschiedlich tief in diesen hineinragt, so kann der Kugelgewindetrieb zu dessen Standzeiterhöhung gegen eine unerwünschte Biegebelastung geschützt werden, wenn das motorferne Längsende der Spindel durch ein Gleitstück an einer Innenumfangsfläche des Auslegers abgestützt ist. Das Gleitstück kann dann an der Innenumfangsfläche des Auslegers in Richtung der Verlagerungsachse gleiten.

Zusätzlich oder alternativ zu der oben angesprochenen Steifigkeitserhöhung durch geeignete Werkstoffwahl zur Herstellung des Führungskörpers kann eine Steifigkeitserhöhung des gesamten Linearführungs-Vorschubmoduls durch Verwendung einer Mehrzahl von in Richtung der Verlagerungsachse mit Abstand voneinander angeordneten Führungskörpern erzielt werden.

Durch die Ausbildung des Auslegers mit einem bei Betrachtung in einem zur Verlagerungsachse orthogonalen Schnitt geschlossenen Profil kann der Ausleger mit hoher Biegesteifigkeit und vor allem mit hoher Torsionssteifigkeit bereitgestellt werden. Bei Anforderungen mit geringer oder mittlerer Krafteinwirkung auf den voll aus dem Gehäuse ausgefahrenen Ausleger kann ein Aluminiumausleger ausreichen. Eine besonders hohe Steifigkeit erhält man dagegen bei einem Ausleger aus Stahl. Die Belastungen auf den Ausleger werden auch durch die Vorspannung der Führung erzeugt, die aufgrund des Führungskörpers mit geschlossenem Profil hoch sein kann. Eine hohe Vorspannung führt zu einer vorteilhaften erhöhten Führungssteifigkeit.

Gerade bei häufig vorkommenden Torsionsbelastungen des Auslegers kann eine vorteilhafte homogene Spannungsbelastung des Auslegers längs seines Umfangs um die Verlagerungsachse erzielt werden, wenn der Ausleger in Umfangsrichtung eine im Wesentlichen konstante Wanddicke aufweist.

Zur Abstützung des oben genannten Gleitstücks, welches wiederum das freie Spindelende eines Kugelgewindetriebs stützt, kann der Ausleger eine in Umfangsrichtung zumindest abschnittsweise zylindrische Innenumfangsfläche aufweisen. In diesem Falle kann das dann vorzugsweise ebenfalls zylindrische Gleitstück nicht nur in Richtung der Verlagerungsachse, sondern auch in Umfangsrichtung relativ zur Innenumfangsfläche des Auslegers gleiten. Außerdem existiert bei zylindrischen Gleitstücken keine Montagestellung, welche beim Einbau zu beachten wäre. Es reicht dann aus, wenn die Zylinderachsen von Innenumfangsfläche und Gleitstück übereinstimmen. Das Gleitstück kann um die Drehachse der Spindel des Kugelgewindetriebs herum drehbar vorgesehen sein, wie es in der DE 33 08 537 C1 beschrieben ist.

Zur leichteren hochgenauen Bearbeitung von auslegerseitigen Wälzkörperlaufbahnen ist es vorteilhaft, wenn der Ausleger wenigstens zwei im Wesentlichen ebene, vorzugsweise zueinander parallele, Anlageflächen aufweist. Diese Anlageflächen können zur Aufspannung des Auslegers in einer Bearbeitungsmaschine dienen. Besonders einfach kann die Aufspannung des zu bearbeitenden Auslegers dann erfolgen, wenn die wenigstens zwei im Wesentlichen ebenen Anlageflächen am Außenumfang des Auslegers vorgesehen sind.

Zur Ausbildung der oben beschriebenen im Wesentlichen ebenen Anlageflächen sowie zur Ausbildung der auslegerseitigen Wälzkörperlaufbahnen weist der Ausleger in der Regel Materialverdickungen auf, um ausreichend Material zum Vorsehen der Geometrien, wie Laufbahn und Anlagefläche, unter Verwendung von materialabtragenden Verfahren zur Verfügung zu haben. Trotz dieser Materialverdickungen kann der Ausleger die oben beschriebene vorteilhafte in Umfangsrichtung im Wesentlichen konstante Materialdicke aufweisen, wenn er an seinem Innenumfang bezogen auf die Verlagerungsachse in radialer Richtung und in Richtung der Verlagerungsachse verlaufende Vertiefungen aufweist. Zusätzlich werden durch diese Vertiefungen gemeinsam mit den an im Wesentlichen gleichen Umfangsorten ausgebildeten Materialerhebungen am Außenumfang des Auslegers in Längsrichtung desselben verlaufende Rippen gebildet, welche zusätzlich zur Erhöhung der Biegesteifigkeit des Auslegers beitragen.

Ein Ausleger, wie der oben beschriebene kann besonders vorteilhaft durch ein so genanntes Hämmerverfahren hergestellt werden, wie es in der Druckschrift CH 315948 A beschrieben ist. Verwendet man Stahl als Werkstoff für den Ausleger, wird durch dieses Hämmerverfahren der Ausleger zusätzlich verfestigt, was seine Steifigkeit weiter erhöht. Alternativ könnte ein gezogenes Stahl-Vollprofil verwendet werden, das anschließend aufgebohrt wird. Die Vertiefungen an der Innenumfangsfläche könnten dann entfallen.

Ein durch ein Hämmerverfahren hergestellter Ausleger verleiht einem Linearführungs-Vorschubmodul aufgrund seiner herausragenden Steifigkeit und Festigkeitseigenschaften sowie aufgrund seiner einfachen Herstellbarkeit einen besonderen Wert.

Genauer kann ein vorteilhafter Ausleger für ein Linearführungs-Vorschubmodul, insbesondere mit den oben beschriebenen weiteren Merkmalen, mit einem Verfahren hergestellt werden, gemäß welchem ein Auslegerrohling durch Hämmern in eine endkonturnahe Gestalt gebracht wird. "Endkonturnah" bedeutet dabei, dass das nach dem Hämmern erhaltene Auslegerzwischenprodukt im Wesentlichen unbearbeitet bleiben kann, abgesehen von den die Führungsgenauigkeit beeinflussenden Laufbahnen und ggf. den im Wesentlichen ebenen Anlageflächen. Nach dem Hämmern wird dann wenigstens eine, vorzugsweise werden jedoch wenigstens zwei, besonders bevorzugt genau zwei ebene Anlageflächen am Auslegerzwischenprodukt ausgebildet, etwa durch spanende Bearbeitungsverfahren. Mit Hilfe der im Wesentlichen ebenen Anlageflächen kann dann das Ausleger-Weiterverarbeitungsprodukt zur spanenden Bearbeitung von auslegerseitigen Laufbahnen gerade eingespannt werden. Als besonders geeignet zur Ausbildung von Laufbahnen haben sich Schleifverfahren erwiesen.

Neben den oben genannten Verfahrensschritten kann das Verfahren zur Herstellung eines Auslegers weitere Verfahrensschritte aufweisen, wie etwa ein induktives Härten der Laufbahnbereiche.

Die vorliegende Erfindung wird im Folgenden anhand der beiliegenden Figuren näher erläutert werden. Es stellt dar:
- Fig. 1: einen Querschnitt orthogonal zur Verlagerungsrichtung durch eine Ausführungsform eines erfindungsgemäßen Linearführungs-Vorschubmoduls, und
- Fig. 2: eine Längsschnittansicht des Linearführungs-Vorschubmoduls von Fig. 1 entlang der Ebene II-II in Fig. 1.

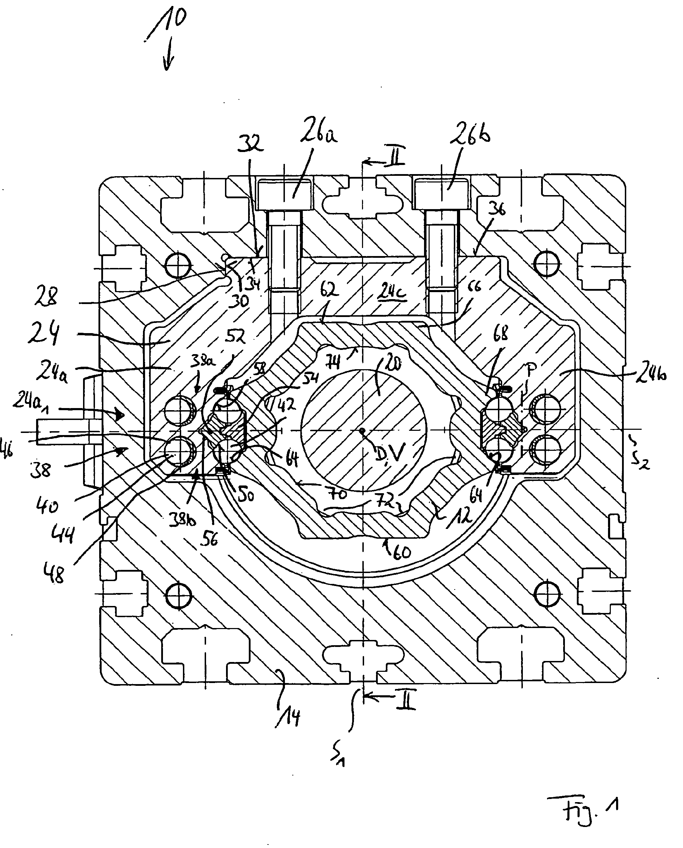

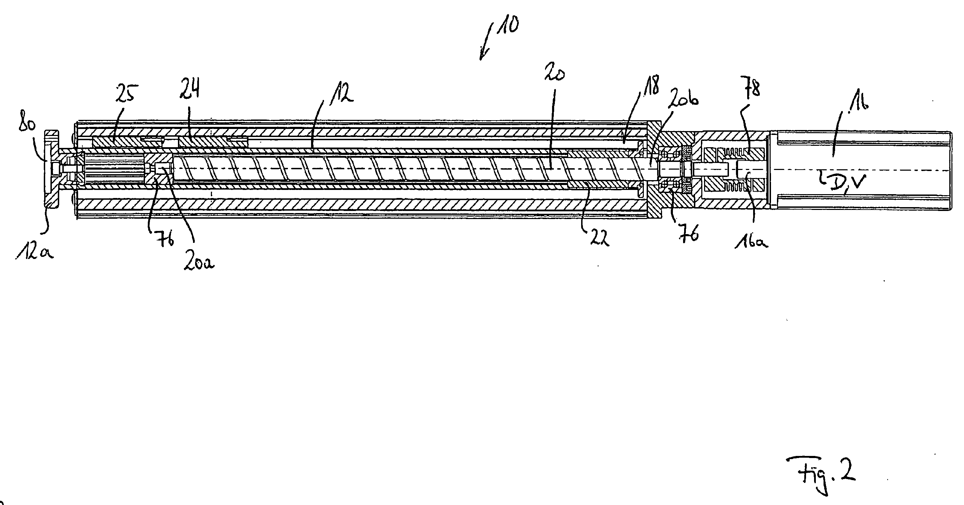

In den Fig. 1 und 2 ist ein erfindungsgemäßes Linearführungs-Vorschubmodul allgemein mit 10 bezeichnet. Das Vorschubmodul 10 umfasst einen Ausleger 12, ein Gehäuse 14, einen Elektromotor 16 (siehe Fig. 2) sowie einen Kugelgewindetrieb 18.

Der Kugelgewindetrieb 18 umfasst eine Spindel 20 sowie eine die Spindel 20 umgebende Mutter 22, welche starr mit dem Ausleger 12 kraft- und bewegungsübertragend gekoppelt ist. Die Drehachse D der Spindel 20 des Kugelgewindetriebs 18 fällt mit der Verlagerungsachse V zusammen, längs welcher der Ausleger 12 aus dem Gehäuse 14 ausfahrbar und in dieses einfahrbar ist. Die Verlagerungsachse V ist orthogonal zur Zeichenebene der Fig. 1 orientiert und liegt in der Zeichenebene der Fig. 2. Die Achsen D und V bilden ebenso eine Mittelachse des Auslegers 12.

Das Gehäuse 14 umschließt in Umfangsrichtung um die Verlagerungsachse V herum den Ausleger 12 vollständig, d.h. sowohl der Ausleger 12 als auch das Gehäuse 14 weisen in einem zur Verlagerungsachse V orthogonalen Schnitt ein geschlossenes Profil auf. Das Gehäuse 14 ist als Aluminium-Strangpressprofil ausgeführt.

In dem Gehäuse 14 ist ein gesonderter Führungskörper 24 vorgesehen und mit Schrauben 26a und 26b befestigt. Wie in Fig. 2 zu sehen ist, ist zur Erhöhung der Führungssteifigkeit in Richtung der Verlagerungsachse V mit Abstand zum Führungskörper 24 ein mit dem Führungskörper 24 identischer weiterer Führungskörper 25 angeordnet. Der Führungskörper 24 liegt in einem montiertem Zustand des Linearführungs-Vorschubmoduls mit einer ersten ebenen Anlagefläche 28 an einer ersten ebenen Anlagegegenfläche 30 des Gehäuses 14 an. Weiterhin liegt der Führungskörper 24 mit einer zweiten ebenen Anlagefläche 32 an einer zweiten ebenen Anlagegegenfläche 34 des Gehäuses 14 an. Die erste und die zweite Anlagefläche 28 und 32 sind im rechten Winkel zueinander abgewinkelt. Ebenfalls schließen die erste und die zweite Anlagegegenfläche 30 und 34 einen rechten Winkel zwischen sich ein. Die Anlageflächen 28 und 32 und die Anlagegegenflächen 30 und 34 verlaufen orthogonal zur Zeichenebene der Fig. 1.

Zusätzlich weist der Führungskörper 24 eine dritte im Wesentlichen ebene Anlagefläche 36 auf, welche ebenfalls an der zweiten Anlagegegenfläche 34 anliegt. Durch diese Abstützung ist der Führungskörper 24 in seiner Lage relativ zum Gehäuse 14 und in seiner Orientierung zur Verlagerungsachse V in sehr einfacher Weise eindeutig fixiert.

Der Führungskörper 24 mit U-förmigem Querschnitt weist zwei freie Schenkel 24a und 24b auf, welche über eine Basis 24c miteinander verbunden sind. Während an der Basis 24c die Anlageflächen 28, 32 und 36 ausgebildet sind, sind in den Schenkeln 24a und 24b die Wälzkörperumläufe vorgesehen. Da der Führungskörper 24 im Wesentlichen spiegelsymmetrisch zu einer die Verlagerungsachse V enthaltenden und zur Basis 24c orthogonalen Symmetrieebene S₁ ist, wird im Folgenden lediglich der in Fig. 1 linke freie Schenkel 24a beschrieben werden. Dessen Beschreibung ist jedoch unter Berücksichtigung der Spiegelsymmetrie auf den in Fig. 1 rechten freien Schenkel 24b anwendbar.

Auch der Ausleger 12 ist zu der Ebene S₁ im Wesentlichen spiegelsymmetrisch. Zusätzlich ist der Ausleger 12 auch zu einer zur Symmetrieebene S₁ orthogonalen, ebenfalls die Verlagerungsachse V enthaltenden Symmetrieebene S₂ spiegelsymmetrisch. Auch der Ausleger 12 wird daher hauptsächlich nur in Bezug auf seine mit dem Schenkel 24a zusammenwirkende Seite beschrieben werden, wobei deren Beschreibung unter Berücksichtigung der oben genannten Symmetriebedingungen auch auf die mit dem anderen Schenkel 24b des Führungskörpers 24 zusammenwirkende Seite anwendbar ist.

An dem freien Endbereich 24a₁ des in Fig. 1 linken Schenkels 24a des vom Gehäuse 14 umschlossenen Führungskörpers 24 ist ein Wälzkörperreihenpaar 38 vorgesehen, welches zwei umlaufende Wälzkörperreihen 38a und 38b mit im Wesentlichen parallelen Umlaufbahnen umfasst. Die umlaufenden Wälzkörperreihen 38a und 38b sind im Wesentlichen spiegelsymmetrisch zur Ebene S₂ angeordnet, sodass es ausreicht, die in Fig. 1 untere umlaufende Wälzkörperreihe 38b zu beschreiben. Unter Berücksichtigung der oben genannten Symmetriebedingung gilt deren Beschreibung auch für die in Fig. 1 obere umlaufende Wälzkörperreihe 38a sowie für die Wälzkörperreihen des Schenkels 24b.

Die untere Wälzkörperreihe 38b weist als Wälzkörper Kugeln 40 auf und umfasst einen Tragkugelabschnitt 42 sowie einen Rücklaufkugelabschnitt 44. An den beiden in Richtung der Verlagerungsachse V gelegenen Längsenden des Tragkugelabschnitts 42 und des Rücklaufkugelabschnitts 44 sind in Fig. 1 nicht dargestellte Kugelumlenkabschnitte angeordnet, welche Kugeln vom Tragabschnitt 42 zum Rücklaufabschnitt 44 bzw. vom Rücklaufabschnitt 44 zum Tragabschnitt 42 überführen.

Zur Ausbildung des Rücklaufabschnitts 44 weist der Endbereich 24a₁ des Schenkels 24a des Führungskörpers 24 einen Durchgangskanal 46 auf, welcher einen größeren Durchmesser als die darin bewegten Kugeln 40 aufweist. Zusätzlich ist in dem Durchgangskanal 46 eine Kunststofflaufschale 48 angeordnet, welche die im Rücklaufabschnitt 44 im Wesentlichen lastfrei laufenden Kugeln 40 sich spielfrei in Richtung der Verlagerungsachse V bewegen lässt.

Der in dem Ausführungsbeispiel der Fig. 1 und 2 gezeigte Führungskörper 24 ist aus Gewichtsgründen aus Aluminium gefertigt. Die führungskörperseitigen bzw. gehäuseseitigen Kugellaufbahnen 50 sind zur Erhöhung der Verschleißfestigkeit deshalb an Laufbahneinlagen 52 ausgebildet, welche aus Stahl, insbesondere gehärtetem Stahl hergestellt sind. Derartige Laufbahneinlagen sind beispielsweise aus der EP 0 367 196 A2, dort insbesondere aus der Fig. 8, bekannt.

Die Kugeln 40 des Tragabschnitts 42 sind durch einen Steg 54 am Führungskörper 24 gehalten und vor Herausfallen gesichert. Der Steg 54 ist vor und hinter der Zeichenebene der Fig. 1 mit nicht näher dargestellten und an sich bekannten Mitteln am Führungskörper 24 gesichert. Die Laufbahneinlagen 52 können, wie in der EP 0 367 196 A2 beschrieben, um eine zur Ebene S₂ orthogonale Schaukelachse P schaukelnd in der zur Aufnahme der Laufbahneinlagen 52 am Führungskörper 24 vorgesehenen V-Nut 56 aufgenommen sein. Der Übersichtlichkeit halber ist die Schaukelachse P am in Fig. 1 rechten freien Schenkel 24b des Führungskörpers 24 eingezeichnet.

Der Führungskörper 24 trägt alle den Ausleger 12 führenden umlaufenden Wälzkörperreihen 38a, 38b usw. Bei der Herstellung des Führungskörpers 24 werden zunächst, nachdem ein Führungskörperrohling in die gewünschte U-förmige Gestalt gebracht wurde, die Anlageflächen 28, 32 und 36 gefertigt, welche für den weiteren Fertigungsprozess als Bezugsebenen dienen. Dies ist deshalb sinnvoll, da diese Anlageflächen 28, 32 und 36 bei der späteren Montage des Führungskörpers im Gehäuse 14 dessen Lage und Orientierung im Zusammenwirken mit den Gegenanlageflächen 30 und 34 im Gehäuse 14 definieren.

Nach der Erzeugung der Bezugsflächen 28, 32 und 36 werden dann die Kugeldurchgänge (Durchgangskanäle) 46 erzeugt, etwa durch Bohren, wobei in dieser Aufspannung auch die Konturen, wie etwa die Rinnenfläche 58 zur führungskörperseitigen Aufnahme der Kugeln 40 des Tragabschnitts 42 sowie die V-Nut 56 zur Aufnahme der Laufbahneinlage 52, durch geeignete Fertigungsverfahren, wie etwa Fräsen, Schleifen, Stoßen usw. erzeugt werden. Dies kann also vorteilhaft in einer einzigen Aufspannung geschehen, sodass die vier umlaufenden Wälzkörperreihen am Führungskörper 24 mit hoher Lagegenauigkeit relativ zueinander positionierbar sind. Aus diesem Grunde kann der Führungskörper 24 ohne weitere Justagearbeit mit den Anlageflächen 28, 32 und 36 einfach in das Gehäuse 14 eingesetzt werden, wobei nach Festlegung des Führungskörpers 24 im Gehäuse 14 die umlaufenden Wälzkörperreihen sich ohne weitere Justagearbeit in der gewünschten Position und in der gewünschten Orientierung bezüglich der Verlagerungsachse V befinden.

Der Ausleger 12 wird durch ein Hämmerverfahren ausgehend von einem rohrförmigen Rohling erzeugt. Das Hämmerverfahren ist ausführlich in der Druckschrift CH 315948 A beschrieben, auf welche hier ausdrücklich Bezug genommen wird.

Nach dem Hämmern befindet sich der Rohling 12 im Wesentlichen in der in Fig. 1 gezeigten Gestalt, wobei jedoch die Funktionsflächen noch nicht bearbeitet sind. Im Anschluss an das Hämmern werden dann die entgegengesetzten, im Wesentlichen parallelen ebenen Flächen 60 und 62 bearbeitet. Diese Flächen 60 und 62 dienen für die weitere Bearbeitung des Auslegers 12 als Bezugs- und Aufspannflächen. Die Flächen 60 und 62 gestatten eine gerade Aufspannung des Auslegers 12 zur anschließenden Bearbeitung der auslegerseitigen Laufflächen 64 (siehe rechte Hälfte des Auslegers 12 in Fig. 1) für die Tragabschnitte 42 der umlaufenden Wälzkörperreihen. Diese auslegerseitigen Laufbahnabschnitte 64 werden vorzugsweise durch Schleifen erzeugt.

Zur Ausbildung der Flächen 60 und 62 sowie der Laufbahnabschnitte 64 sind am Umfang des Auslegers 12 zunächst Materialanhäufungen vorgesehen, wie beispielsweise die Materialanhäufung 66 oder die Materialanhäufung 68. Diese Materialanhäufungen stellen ausreichend Material für eine spanende Bearbeitung des Auslegers bereit.

Da jedoch für eine Hämmer-Bearbeitung des Auslegers 12 eine in Umfangsrichtung um die Verlagerungsachse V herum im Wesentlichen konstante Materialdicke vorteilhaft ist, eine im Wesentlichen konstante Materialdicke in Umfangsrichtung am Ausleger 12 darüber hinaus auch für die sich im Ausleger unter Torsionsbelastung ausbildenden Spannungen vorteilhaft ist, sind im Bereich der Materialanhäufungen 66 und 68 am Innenumfang 70 des Auslegers 12 Nuten 72 vorgesehen, welche bezüglich der Verlagerungsachse V in radialer Richtung in den Ausleger 12 hineinragen und welche überdies in Richtung der Verlagerungsachse V verlaufen.

Diese Nuten 72 haben im Zusammenwirken mit den Materialanhäufungen 66 und 68, bei welchen sie ausgebildet sind, überdies eine den Ausleger 12 verrippende Wirkung, sodass dessen Biegesteifigkeit erhöht ist. In Umfangsrichtung zwischen den Nuten 72, von welchen der Übersichtlichkeit halber nur drei mit Bezugszeichen versehen sind, weist der Innenumfang 70 des Auslegers 12 zylindrische Abschnitte 74 auf. Diese gestatten eine besonders verlustarme Aufnahme und Relativbewegung eines Gleitstücks 76 (siehe Fig. 2), in welchem ein motorfernes Längsende 20a der Spindel 20 des Kugelgewindetriebs 18 aufgenommen und abgestützt ist. Die Spindel 20 kann dabei relativ zum Gleitstück 76 um die Drehachse D drehen. Da eine Drehung der Spindel 20 eine Verlagerung des Auslegers 12 in Richtung der Verlagerungsachse V bewirkt, gleitet gleichzeitig der Ausleger 12 in Richtung der Verlagerungsachse V relativ zum Gleitstück 76.

Durch das Vorsehen einer zumindest abschnittsweise zylindrischen Innenumfangsfläche am Innenumfang 70 des Auslegers 12 kann ein Gleitstück 76 mit zylindrischer Außenwand verwendet werden, welches besonders einfach zu montieren ist, da es auf eine winkelmäßige Anordnungsbeziehung zwischen Gleitstück 76 und Ausleger 12 nicht ankommt.

Wie in Fig. 2 weiter zu erkennen ist, ist die Spindel 20 an ihrem motornäheren Längsende 20b mit einem Wälzlager 76 zur Drehung um die Drehachse D gelagert. Die Spindel 20 ist darüber hinaus durch eine Welle-Nabe-Verbindung 78 mit der Ausgangswelle 16a des Elektromotors 16 antriebsmäßig verbunden.

An einem aus dem Gehäuse 14 auskragenden Längsende 12a des Auslegers kann eine Montageplatte 80 vorgesehen sein, an welchem Funktionseinheiten anbringbar sind, welche mit dem Ausleger 12 verstellbar sind.

## Patentansprüche

1. Linearführungs-Vorschubmodul mit einem längs einer Verlagerungsachse (V) verlagerbaren rohrförmigen Ausleger (12), mit einem den rohrförmigen Ausleger (12) umschließenden Gehäuse (14), aus welchem heraus und in weiches hinein der Ausleger (12) längs der Verlagerungsächse (V) verfahrbar ist, sowie mit einer Antriebsvorrichtung (16, 18), welche den Ausleger (12) zur Bewegung relativ zum Gehäuse (14) antreibt,
wobei der Ausleger (12) in dem Gehäuse (14) durch wenigstens zwei in Umfangsrichtung um die Verlagerungsachse (V) mit Abstand angeordnete umlaufende Wälzkörperreihen (38a, 38b) zur Bewegung längs der Verlagerungsachse (V) relativ zum Gehäuse (14) gelagert ist, von welchen umlaufenden Wälzkörperreihen (38a, 38b) jede einen im Wesentlichen in Richtung der Verlagerungsachse (V) verlaufenden kraftbelasteten Wälzkörpertragabschnitt (42) und einen im Wesentlichen unbelasteten Wälzkörperrückführabschnitt (44) aufweist,
wobei in dem Gehäuse (14) ein den Ausleger (12) in Umfangsrichtung zumindest abschnittsweise umgebender Führungskörper (24) angebracht ist, an welchem sowohl Wälzkörperdurchgänge (46) der Wälzkörperrückführabschnitte (44) ausgeformt sind als auch die gehäuseseitigen Laufbahnen (50) der Wätzkörpertragabschnitte (42) der wenigstens zwei Wälzkörperreihen (38a, 38b) vorgesehen sind und wobei der Führungskörper (24), in einer zur Verlägerungsachse (V) orthogonalen Schnittebene betrachtet, einen U-förmigen Querschnitt aufweist, wobei die gehäuseseitigen Wälzkörpertragabschnitt-Laufbahnen (50) in Endbereichen (24a₁) der freien Schenkel (24a, 24b) des U-förmigen Querschnitts vorgesehen sind,
**dadurch gekennzeichnet, dass** der Umfangsrichtungsabstand zwischen zwei an dem Führungskörper (24) ausgebildeten Wälzkörperreihen zwischen 145° und 225° beträgt und dass an einem axialen Abschnitt des Linearführungs-Vorschubmoduls nur ein Führungskörper (24) angeordnet ist.

2. Linearführungs-Vorschubmodul nach Anspruch 1,
**dadurch gekennzeichnet, dass** mehr als zwei umlaufende Wälzkörperreihen (38a, 38b) vorgesehen sind, wobei vorzugsweise jeweils wenigstens zwei benachbarte Wälzkörperreihen (38a, 38b) zu einer Wälzkörperreiheneinheit (38), insbesondere einem Wätzkörperreihenpaar (38), mit im Wesentlichen parallelen Wälzkörperumlaufbahnen zusammengefasst vorgesehen sind.

3. Linearführungs-Vorschubmodul nach einem der vorhergehenden Ansprüche,
**dadurch gekennzeichnet, dass** der Umfangsrichtungsabstand zwischen zwei Wälzkörperreihen, beziehungsweise zwischen zwei Wälzkörperreiheneinheiten, zwischen 160° und 200°, vorzugsweise etwa 180° beträgt.

4. Linearführungs-Vorschubmodul nach einem der vorhergehenden Ansprüche,
**dadurch gekennzeichnet, dass** der gesondert vom Gehäuse (14) ausgebildete Führungskörper (24) eine Ausrichtgeometrie (28, 32, 36) aufweist, welche im montierten Zustand des Vorschubmoduls (10) mit einer Ausrichtgegengeometrie (30, 34) des Gehäuses (14) zur Lagefixierung des Führungskörpers (24) wenigstens in Umfangsrichtung sowie zur Orientierung des Führungskörpers (24) relativ zur Verlagerungsachse (V) zusammenwirkt.

5. Linearführungs-Vorschubmodul nach Anspruch 4,
**dadurch gekennzeichnet, dass** die Ausrichtgeometrie (28, 32, 36) und die Ausrichtgegengeomtrie (30, 34) jeweils wenigstens zwei zueinander um eine zur Verlagerungsachse (V) parallele Abwinkelachse abgewinkelte, vorzugsweise im Wesentlichen ebene, Anlageflächen (28 und 32, 36) beziehungsweise Gegenanlageflächen (30, 34) aufweisen, wobei die wenigstens zwei Anlageflächen (28 und 32, 36) und die zwei Gegenanlageflächen (30, 34) jeweils vorzugsweise einen rechten Winkel einschließen.

6. Linearführungs-Vorschubmodul nach einem der vorhergehenden Ansprüche,
**dadurch gekennzeichnet, dass** zumindest ein Abschnitt eines Bewegungsausgabeteils (20) der Antriebsvorrichtung (16, 18) von dem Ausleger (12) umschlossen ist.

7. Linearführungs-Vorschubmodul nach einem der vorhergehenden Ansprüche,
**dadurch gekennzeichnet, dass** die Antriebsvorrichtung (16, 18) einen Elektromotor (16) mit einer eine Drehbewegung in eine lineare Translationsbewegung umsetzenden Vorrichtung (18), insbesondere einem Kugelgewindetrieb (18), umfasst.

8. Linearführungs-Vorschubmodul nach Anspruch 6 und 7,
**dadurch gekennzeichnet, dass** die Antriebsvorrichtung (16, 18) einen Kugelgewindetrieb (18) umfasst, dessen Spindel (20) in den Ausleger (12) ragt, wobei das motorfeme Längsende (20a) der Spindel (20) durch ein Gleitstück (76) an einer Innenumfangsfläche (70) des Auslegers (12) abgestützt ist.

9. Linearführungs-Vorschubmodul nach einem der vorhergehenden Ansprüche,
**dadurch gekennzeichnet, dass** es eine Mehrzahl von in Richtung der Verlagerungsachse (V) mit axialem Abstand voneinander angeordneten Führungskörpern (24, 25) umfasst.

10. Linearführungs-Vorschubmodul nach einem der vorhergehenden Ansprüche,
**dadurch gekennzeichnet, dass** der Ausleger (12), bei Betrachtung in einem zur Verlagerungsachse (V) orthogonalen Schnitt, ein geschlossenes Profil, insbesondere aus Stahl, aufweist.

11. Linearführungs-Vorschubmodul nach Anspruch 10,
**dadurch gekennzeichnet, dass** der Ausleger (12) in Umfangsrichtung eine im Wesentlichen konstante Wanddicke aufweist.

12. Linearführungs-Vorschubmodul nach Anspruch 10 oder 11,
**dadurch gekennzeichnet, dass** der Ausleger (12) eine in Umfangsrichtung zumindest abschnittsweise kreiszylindrische Innenumfangsfläche (74) aufweist.

13. Linearführungs-Vorschubmodul nach einem der Ansprüche 10 bis 12,
**dadurch gekennzeichnet, dass** der Ausleger (12) wenigstens zwei im Wesentlichen ebene Anlageflächen (60, 62) aufweist, vorzugsweise an seinem Außenumfang.

14. Linearführungs-Vorschubmodul nach den Ansprüchen 11 und 13,
**dadurch gekennzeichnet, dass** der Ausleger (12) an seinem Innenumfang (70) bezogen auf die Verlagerungsachse (V) in radialer Richtung und in Richtung der Verlagerungsachse (V) verlaufende Vertiefungen (72) aufweist.

15. Linearführungs-Vorschubmodul nach einem der Ansprüche 10 bis 12,
**dadurch gekennzeichnet, dass** der Ausleger (12) unter Einsatz eines Hämmerverfahrens hergestellt ist.

## Claims

1. Linear guide-feed module comprising a tubular cross-arm (12) movable along a movement axis (V), a housing (14) surrounding the tubular cross-arm (12), so that the cross-arm (12) can be moved out of and into said housing along the movement axis (V), and a drive device (16, 18) which drives the cross-arm (12) to move in relation to the housing (14), wherein the cross-arm (12) is mounted in the housing (14) by at least two rows of roller bodies (38a, 38b) running spaced apart in circumferential direction about the movement axis (V) to move along the movement axis (V) relative to the housing (14), each row of rotating roller bodies (38a, 38b) comprising a force-loaded roller body support section (42) running essentially in the direction of the movement axis (V) and a roller body return section (44) which is essentially unloaded, wherein in the housing (14) a guide body (24) surrounding the cross-arm (12) in circumferential direction at least in sections is attached, on which both roller body openings (46) of the roller body return sections (44) are formed and also the housing-side paths (50) of the roller body support sections (42) of the at least two rows of roller bodies (38a, 38b) are provided, and wherein the guide body (24) has a U-shaped cross section as viewed in a cross sectional plane orthogonal to the movement axis (V), wherein the housing-side roller body support section paths (50) are provided in end sections (24a₁) of the free arms (24a, 24b) of the U-shaped cross section,
**characterised in that** the circumferential direction spacing between two roller body rows formed on the guide body (24) is between 145° and 225°, and **in that** on an axial section of the linear guide-feed module only one guide body (24) is arranged.

2. Linear guide-feed module according to claim 1, **characterised in that** more than two rows of circulating roller bodies (38a, 38b) are provided, wherein preferably at least two adjacent roller body rows (38a, 38b) are provided combined in a roller body unit (38), in particular a roller body row pair (38), having essentially parallel roller body circulation paths.

3. Linear guide-feed module according to any one of the preceding claims, **characterised in that** the spacing in circumference direction between two roller body rows, or between two roller body row units is between 160° and 200°, preferably about 180°.

4. Linear guide-feed module according to any one of the preceding claims, **characterised in that** the guide body (24) designed separately from the housing (14) has an alignment geometry (28, 32, 36), which in the assembled state of the feed module (10) cooperates with an alignment counterpart geometry (30, 34) of the housing (14) to fix the position of the guide body (24) at least in circumferential direction and to orient the guide body (24) in relation to the movement axis (V).

5. Linear guide-feed module according to claim 4, **characterised in that** the alignment geometry (28, 32, 36) and the alignment counterpart geometry (30, 34) each have at least two preferably flat contact surfaces (28 and 32, 36) or counterpart contact surfaces (30, 34), which are angularly offset from each other around an angular offset axis parallel to said movement axis (V), wherein the at least two contact surfaces (28 and 32, 36) and the two counterpart contact surfaces (30, 34) preferably enclose a right angle.

6. Linear guide-feed module according to any one of the preceding claims, **characterised in that** at least a section of a movement output part (20) of the drive device (16, 18) is surrounded by the cross-arm (12).

7. Linear guide-feed module according to any one of the preceding claims, **characterised in that** the drive device (16, 18) includes an electric motor (16) provided with a device (18) that converts a rotational motion into a linear translatory motion, in particular a ball screw drive (18).

8. Linear guide-feed module according to claim 6 and 7, **characterised in that** the drive device (16, 18) comprises a ball screw drive (18), the spindle (20) of which protrudes into the cross-arm (12), wherein the longitudinal end (20a) of the spindle, (20) remote from the engine is supported by a slider (76) on an inner circumferential surface (70) of the cross-arm (12).

9. Linear guide-feed module according to any one of the preceding claims, **characterised in that** it comprises a plurality of guide bodies (24, 25) arranged spaced axially apart from one another in the direction of the movement axis (V).

10. Linear guide-feed module according to any one of the preceding claims, **characterised in that** the cross-arm (12) has a profile that is closed when viewed in a section orthogonal to the movement axis (V), which is made in particular of steel.

11. Linear guide-feed module according to claim 10, **characterised in that** the cross-arm (12) has a substantially constant wall thickness in circumferential direction.

12. Linear guide-feed module according to claim 10 or 11, **characterised in that** the cross-arm (12) has an inner circumferential surface (74) that is cylindrical at least in sections in circumferential direction.

13. Linear guide-feed module according to any one of claims 10 to 12, **characterised in that** the cross-arm (12) has at least two substantially flat contact surfaces (60, 62), preferably on its outer circumference.

14. Linear guide-feed module according to claims 11 and 13, **characterised in that** the cross-arm (12) comprises recesses (72) on its inner circumference (70) running relative to the movement axis (V) in radial direction and in the direction of the movement axis (V).

15. Linear guide-feed module according to any one of claims 10 to 12, **characterised in that** the cross-arm (12) is produced using a hammering method.

## Revendications

1. Module d'avancement à guidage linéaire comprenant un bras (12) tubulaire, déplaçable le long d'un axe de déplacement (V), un boîtier (14) entourant le bras (12) tubulaire, à l'extérieur duquel et à l'intérieur duquel le bras (12) peut être déplacé le long de l'axe de déplacement (V), et un dispositif d'entraînement (16, 18), qui entraîne le bras (12) pour le déplacement par rapport au boîtier (14),
le bras (12) étant monté dans le boîtier (14) à travers au moins deux rangées de corps de roulement (38a, 38b) rotatifs disposées à distance dans le sens périphérique autour de l'axe de déplacement (V) pour un déplacement le long de l'axe de déplacement (V) par rapport au boîtier (14), rangées de corps de roulement rotatives (38a, 38b) dont chacune présente une partie portante de corps de roulement (42) sollicitée par la force, agencée sensiblement dans le sens de l'axe de déplacement (V) et une partie de retour de corps de roulement (44) sensiblement non chargée,
un corps de guidage (24) entourant le bras (12) au moins par endroits dans le sens périphérique étant placé dans le boîtier (14), corps sur lequel sont formés des passages de corps de roulement (46) des parties de retour de corps de roulement (44) et les chemins de roulement (50) côté boîtier des parties support de corps de roulement (42) des au moins deux rangées de corps de roulement (38a, 38b) sont prévus et le corps de guidage (24) présentant, vu dans un plan de coupe perpendiculaire à l'axe de déplacement (V), une section en U, les chemins de roulement de partie support de corps de roulement (50) côté boîtier étant prévus dans des zones d'extrémité (24a₁) des branches (24a, 24b) libres de la section en U,
**caractérisé en ce que** la distance dans le sens périphérique entre deux rangées de corps de roulement réalisées sur le corps de guidage (24) est comprise entre 145° et 225° et **en ce que** seul un corps de guidage (24) est disposé sur une partie axiale du module d'avancement à guidage linéaire.

2. Module d'avancement à guidage linéaire selon la revendication 1,
**caractérisé en ce que** plus de deux rangées de corps de roulement (38a, 38b) périphériques sont prévues, sachant que de préférence à chaque fois au moins deux rangées de corps de roulement (38a, 38b) voisines sont prévues de façon regroupée en une unité de rangées de corps de roulement (38), en particulier une paire de rangées de corps de roulement (38), avec des chemins de roulement de corps de roulement sensiblement parallèles.

3. Module d'avancement à guidage linéaire selon l'une quelconque des revendications précédentes,
**caractérisé en ce que** la distance dans le sens périphérique entre les deux rangées de corps de roulement, respectivement entre deux unités de rangées de corps de roulement, se situe entre 160° et 200°, de préférence est d'environ 180°.

4. Module d'avancement à guidage linéaire selon l'une quelconque des revendications précédentes,
**caractérisé en ce que** le corps de guidage (24) conçu séparément du carter (14) présente une géométrie d'alignement (28, 32, 36), qui coopère, lorsque le module d'agencement (10) est monté, avec une contre-géométrie d'alignement (30, 34) du boîtier (14) pour la fixation en position du corps de guidage (24) au moins dans le sens périphérique et pour l'orientation du corps de guidage (24) par rapport à l'axe de déplacement (V).

5. Module d'avancement à guidage linéaire selon la revendication 4,
**caractérisé en ce que** la géométrie d'alignement (28, 32, 36) et la contre-géométrie d'alignement (30, 34) présentent à chaque fois au moins deux surfaces d'appui (28 et 32, 36) respectivement surfaces de contre-appui (30, 34), coudées entre elles d'un angle parallèle à l'axe de déplacement (V), de préférence sensiblement planes, les au moins deux surfaces d'appui (28 et 32, 36) et les deux surfaces de contre-appui (30, 34) formant à chaque fois de préférence un angle droit.

6. Module d'avancement à guidage linéaire selon l'une quelconque des revendications précédentes,
**caractérisé en ce que** au moins un tronçon d'une partie de sortie de déplacement (20) du dispositif d'entraînement (16, 18) est entouré par le bras (12).

7. Module d'avancement à guidage linéaire selon l'une quelconque des revendications précédentes,
**caractérisé en ce que** le dispositif d'entraînement (16, 18) comporte un moteur électrique (16) avec un dispositif (18) convertissant un mouvement de rotation en un mouvement de translation linéaire, en particulier une vis d'entraînement à billes (18).

8. Module d'avancement à guidage linéaire selon les revendications 6 et 7,
**caractérisé en ce que** le dispositif d'entraînement (16, 18) comporte une vis d'entraînement à billes (18), dont la broche (20) dépasse dans le bras (12), l'extrémité longitudinale (20a), éloignée du moteur, de la broche (20) étant soutenue par une pièce de glissement (76) sur une surface périphérique intérieur (70) du bras (12).

9. Module d'avancement à guidage linéaire selon l'une quelconque des revendications précédentes,
**caractérisé en ce qu'**il comporte une pluralité de corps de guidage (24, 25) disposés en direction de l'axe de déplacement (V) à une distance axiale les uns des autres.

10. Module d'avancement à guidage linéaire selon l'une quelconque des revendications précédentes,
**caractérisé en ce que** le bras (12) présente, vu dans une coupe perpendiculaire à l'axe de déplacement (V), un profil fermé, en particulier en acier.

11. Module d'avancement à guidage linéaire selon la revendication 10,
**caractérisé en ce que** le cantelever (12) présente dans le sens périphérique une épaisseur de paroi sensiblement constante.

12. Module d'avancement à guidage linéaire selon la revendication 10 ou 11,
**caractérisé en ce que** le bras (12) présente une surface périphérique intérieure (74) cylindrique circulaire au moins par endroits dans le sens périphérique.

13. Module d'avancement à guidage linéaire selon l'une quelconque des revendications 10 à 12,
**caractérisé en ce que** le bras (12) présente au moins deux surfaces d'appui (60, 62) sensiblement planes, de préférence sur son pourtour extérieur.

14. Module d'avancement à guidage linéaire selon les revendications 11 et 13,
**caractérisé en ce que** le bras (12) présente sur son pourtour intérieur (70) des cavités (72) agencées dans le sens radial par rapport à l'axe de déplacement (V) et en direction de l'axe de déplacement (V).

15. Module d'avancement à guidage linéaire selon l'une quelconque des revendications 10 à 12,
**caractérisé en ce que** le bras (12) est fabriqué en utilisant un procédé de martelage.
